(19) Europäisches Patentamt
European Patent Office
Office européen des brevets

(11) Publication number: **0 016 642**
A1

# (12) EUROPEAN PATENT APPLICATION

(21) Application number: 80300856.4

(22) Date of filing: 20.03.80

(51) Int. Cl.[3]: **C 09 B 67/38**
C 09 B 67/36, C 09 B 67/42
C 09 B 67/46, C 09 B 23/00
C 09 B 29/00, D 06 P 1/46
D 06 P 1/16, D 06 P 1/18

(30) Priority: 21.03.79 US 22539

(43) Date of publication of application: 01.10.80 Bulletin 80/20

(84) Designated Contracting States: CH DE FR GB IT

(71) Applicant: EASTMAN KODAK COMPANY
343 State Street
Rochester, New York 14650(US)

(72) Inventor: Hedberg, David George, Jr.
P.O. Box 511
Kingsport, Tennessee(US)

(74) Representative: Trangmar, Leigh Alan et al,
KODAK LIMITED P.O. Box 114 246 High Holborn
London WC1V 7EA(GB)

## (54) Dye and dyebath compositions and process for dyeing.

(57) Disperse azo and methine dye compositions such as powders and paste containing 0.25 to 4.0 parts weight sodium lignin sulphonate per part of dye are prepared without loss of dye through chemical degradation or the like during processing including grinding and contain 0.10 to 5.0 parts by weight of an ammonium compound e.g. ammonium sulphate. Dyebaths prepared therefrom produce dyeings of exceptionally high colour yield on such fibres as polyester, triacetate, acetate, polyamides, and blends thereof with other natural and synthetic fibres.

EP 0 016 642 A1

Croydon Printing Company Ltd.

DYE AND DYEBATH COMPOSITIONS AND PROCESS FOR DYEING

This invention concerns dye and dyebath compositions, and a process for exhaust dyeing synthetic fibre material.

Many disperse dyes, particularly azo and methine dyes, lose colour during manufacture, particularly during grinding, and also during the dyeing operation, apparently through chemical alteration of the dye molecule by reduction, hydrolysis, or the like, caused by a variety and combination of factors such as changes in pH of the dyebath, temperature changes, the particular types of additives employed e.g., dispersing, sequestering, anti-foaming, surfactant and levelling agents, as well as residual fibre processing chemicals including sizes, lubricants and the like. Of particular significance in this regard are the various sodium lignin (or ligno) sulfphonates which have found extensive use in dye preparation.

We have now discovered that the addition of ammonium compounds, for example, ammonium sulphate to a dye/sodium lignin sulphonate system prior to or during the grinding operation imparts greatly improved dye stability and produces dyeings of high colour yield on such fibres as polyester, triacetate, acetate, and polyamides, and blends thereof with other natural and synthetic fibres under the aforesaid adverse conditions.

The present invention, therefore, provides dye compositions and dyebath compositions which markedly diminishes the loss in color yield and dyeability caused by such factors as mentioned above.

According to the present invention there is provided a dye composition comprising an azo or methine dye and from 0.25 to 4.0 parts by weight of sodium lignin sulphonate per part by weight of dye characterized in that it contains from 0.10 to 5 parts

BAD ORIGINAL

by weight of an ammonium compound per part by weight of dye.

The preferred ammonium compounds are one or more of ammonium sulphate, chloride, acetate and hydroxide. The sodium lignin sulphonate (SLS) is preferably present in concentrations of from 0.5 to 3.0 parts by weight of SLS per part by weight of dye. The ammonium compound, e.g., $(NH_4)_2SO_4$ is preferably used in concentrations of from 1 to 3, especially of from 0.2 to 0.5 parts by weight of ammonium compound per part by weight of dye.

The SLS and ammonium compound are preferably added to the crude dye cake prior to the grinding operation, and, if needed, additional ammonium compound may be added after grinding for dilution of either the dried powder or aqueous paste to obtain the desired dye strength. Conventional additives and auxiliaries such as wetting agents, fungicides, antifoam agents and suspension aids such as hydroxyethylcellulose may also be employed to perform their usual functions in the compositions as desired.

It is noted that other types of dyes such as anthraquinones can be admixed with the azo or methine dyes without detracting from the performance of the present invention.

The sodium lignin sulphonate (SLS) usually employed in dye compositions is derived from wood pulping processes. The degree of sulphonation of the lignin may vary for example from 0.1 to 10.0 gram moles of sulphur per 1000 grams of lignin, preferably from 0.5 to 5.0. The sulphonated lignins may be from any source such as sulphite lignins from acid and neutral processes, kraft lignins from the sulphate pulping process and lignins derived from other alkaline processes such as the soda or modified soda processes.

One of the main sources of sulphonated lignin is the residual pulping liquors of the paper and pulp industries where lignocellulosic materials such as wood, straw, corn stalks, bagasse, and the like are processed to separate the cellulose or pulp from the lignin. For example, the black liquor obtained from the kraft, soda and other alkali processes may be sulphonated by reacting the product with a bisulphite or sulphite. In the sulphite pulping process, the lignocellulosic material is digested with a bisulphite or sulphite to obtain a sulphonated residual pulping liquor wherein the sulphonated lignin is dissolved. Likewise, lignin known as "hydrolysis lignin" obtained from the hydrolysis of lignocellulosic materials in manufacturing wood sugars, or "hydrotropic lignins" derived from hydrotropic pulping processes may be sulphonated and used. The residual liquors or products containing the lignin portion of the lignocellulosic materials from the various processes may be treated by the conventional methods to sulphonate the lignin to the different degrees desired.

A preferred pulping process from which the SLS may be obtained is the alkaline or kraft process which can provide highly purified lignins which may be sulphonated to more selective degrees between, for example, 1.0 and 3.0 gram moles of sulphur per 1000 grams of lignin. The SLS may be comprised of lignin units having a weight average molecular weight derived, for example, from gel permeation chromatography using dextran standards, of from 300 to 50,000 or more. The sulphonated lignins may further contain other materials such as carbohydrates, phenols, and organic and inorganic compounds and purification of the sulphonated lignin starting material is desirable. The nonsulphonated lignin materials may be removed by

BAD ORIGINAL

various known methods. The preparation of such lignin material is further described e.g., in U.S. Patents 2,156,520, 3,672,817 and 2,944,922.

The preferred SLS materials contain in percents by weight, sodium from 8 to 16, calcium below 1.0, sulphur from 1.0 to 10.0, and $-OCH_3$ from 1.0 to 10.0. The most preferred sodium lignin sulphonate contains in percents by weight, sodium from 10 to 14, calcium below 0.7, sulphur from 3.0 to 7.0, and $-OCH_3$ from 3.0 to 7.0. A particularly useful low foam material is sold under the tradename Marasperse N-3 (dyestuff) by American Can Co.

The dyes to which the present invention is applicable are azo dyes and methine dyes. These dyes have an unsaturated linkage susceptible to reduction. See, for example, U.S. Patents 3,728,374; 3,917,604 and 3,349,098 for examples of methine dyes. Examples of azo dyes are shown in many U.S. Patents including 3,816,388; 3,816,390; 3,816,391 3,816,392; 3,822,246; 3,829,410; 3,878,189; 3,928,311; 4,049,643; 4,052,379; and 4,076,706. Specific dyes to which the invention is particularly applicable are as follows:

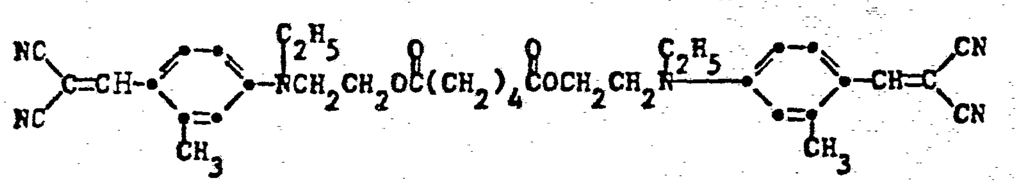

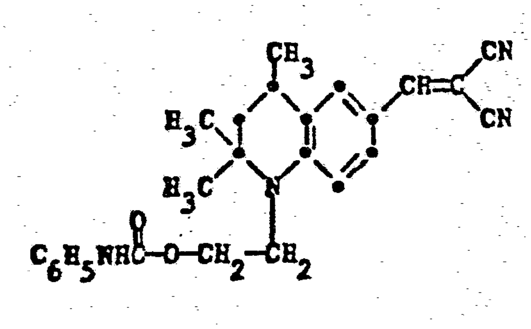

BAD ORIGINAL

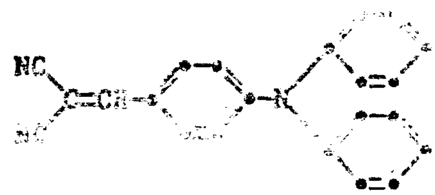

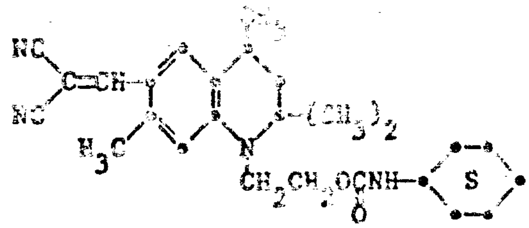

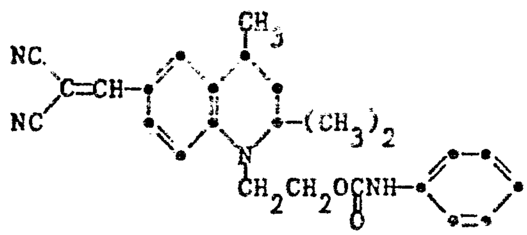

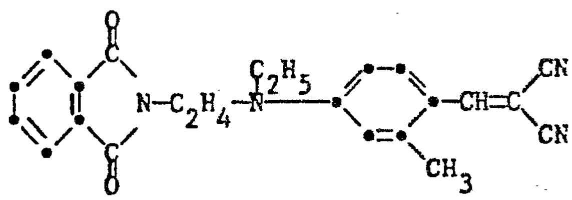

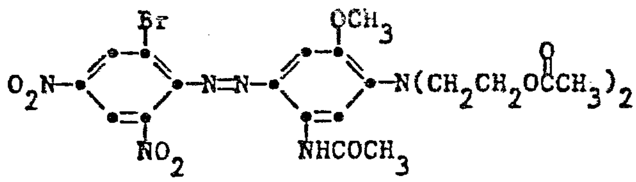

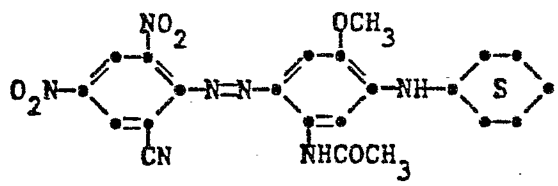

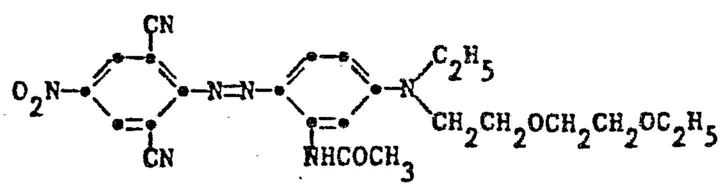

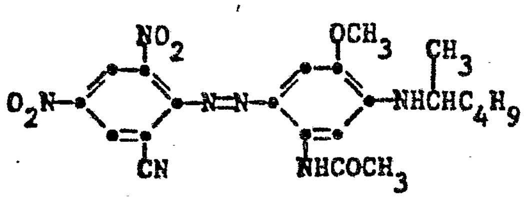

and

BAD ORIGINAL

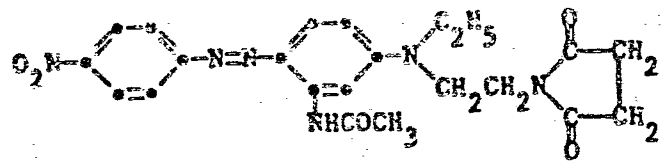

The present invention further provides a dyebath for the dyeing of synthetic fibre material and such material blended with natural fibre material comprising an aqueous bath containing the dye composition of the present invention in an amount such that the dye is present in a concentration of from 0.01 to 10.0% on the weight of fibre to be dyed.

The dyebaths may be prepared in conventional manner, e.g., by adding the powder or paste containing the dye SLS, and ammonium compound to an aqueous system which may contain carrier, sequestrant, and other additives, and adjusting the pH to about 6.0 with acetic acid.

The dye grinds are prepared for example by grinding the dye cake with the sodium lignin sulphonate, ammonium compound, water and other desired agents in a sand mill until acceptable particle size, e.g. less than 50 microns, is obtained for the desired end use. The water during grinding may comprise from 40 to 80% by weight of the total grind charge weight. This wet mix may then be dried if powder rather than paste is desired, and diluted further with additional ammonium compound, preferably $(NH_4)_2SO_4$, to the desired dye strength. It is noted that all or a portion of the ammonium compound may be added during grinding, preferably, however, from 25% to 60% by weight of the ammonium compound is added for the grinding operation. Other conventional diluents and additives may also be employed as supplements. Azo and methine dye grinds

BAD ORIGINAL

prepared in the same manner but omitting the $(NH_4)_2SO_4$ experience substantial loss in colour and dye strength.

The present dye compositions may be used in the dyeing and printing of synthetic fibre materials and such materials blended with natural fibre material, for example polyester, polyamide, acetate and triacetate fibre materials and blends of polyester and cotton. The dye compositions may be applied in any conventional way including padding and printing followed by a heat fixing step. The present compositions are, however, particularly suitable for exhaust dyeing processes which comprise entering the fibre material into a dyebath at a dyebath ratio of from 5:1 to 100:1 on the weight of fibre, the dyebath containing a dye composition of the present invention at a concentration of from 0.01 to 10.0% on the weight of fibre to be dyed. Especially preferred dyeing processes are those at elevated temperatures and pressures, e.g. at temperatures up to 130°C. For example a fabric at a 30:1 weight of water:weight of fabric dyebath ratio, may be dyed at 100-130°C. for 30-120 minutes.

The following Example is included for a better understanding of the invention.

Example

A crude dyecake of each of the dyes specified above (contains about 30% by weight water) is processed with about two times its weight of SLS and about 0.05 times its weight of $(NH_4)_2SO_4$, and ground to a very fine particle size in a sand mill. The wet mix is dried as shown in U.S. Patent 2,574,597, and the sample is diluted with 1.5% nondusting oil (e.g. mineral oil), 0.25% wetting agent and 20.0% ammonium sulphate, all of these percentages being based on the total weight of dry mix, to give the desired strength for the finished dye. A stock bath of each of the finished dyes is prepared by diluting 0.8 g. of finished dye composition

with 1200 ml. of water and adding 2.5 ml. of a 10% by weight water solution of Versene 100 (sodium salt of EDTA). 300 cc. portions of each stock bath are pH adjusted to 4 and 6 with acetic acid and to 8 with tetrasodium pyrophosphate, and used to dye textured, doubleknit, poly(ethylene terephthalate) samples at each of the aforesaid pH's for 30 minutes at 130°C. The procedure is as follows.

The thoroughly wet out fabric samples are entered into a dyepot containing the above dyebath portions, and the contents emptied into a pressure dyeing container and sealed therein. The pressure containers are placed into a High Temperature Launder-Ometer at 49°C, rotation started, and the temperature raised to 130°C. at approximately 3°C per minute. Dyeing proceeds at this temperature for 30 minutes and the Launder-Ometer is then cooled to approximately 93°C. The dyeing containers are removed and the dyed fabrics rinsed in hot demineralized water and dried at about 121°C in a forced air oven. The dyeings are compared to dyeings which are prepared in the same manner but admixed only with sodium lignin sulphonate rather than the present SLS/ammonium compound system. The dyebaths containing the present system give considerably less colour loss than the dye processed with sodium lignin sulphonate dispersing agent alone and diluted with $Na_2SO_4$ rather than $(NH_4)_2SO_4$.

BAD ORIGINAL

CLAIMS

1. A dye composition comprising an azo or methine dye and from 0.25 to 4.0 parts by weight of sodium lignin sulphonate per part by weight of dye characterized in that it contains from 0.10 to 5 parts by weight of an ammonium compound per part by weight of dye.

2. The composition of Claim 1 wherein the ammonium compound is one or more of ammonium sulphate, ammonium chloride, ammonium acetate and ammonium hydroxide.

3. The composition of Claim 1 or 2 in which the concentration of total ammonium compound is from 0.1 to 3.0 parts by weight per part by weight of dye.

4. The composition of any of Claims 1-3 wherein the dye is one or more of:

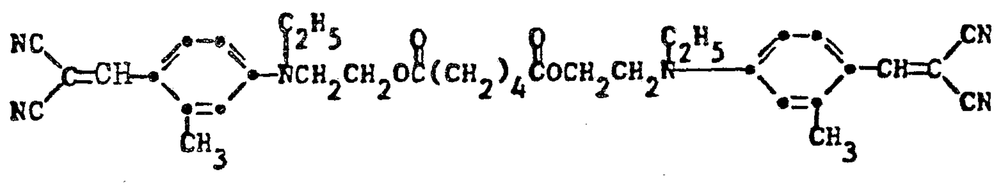

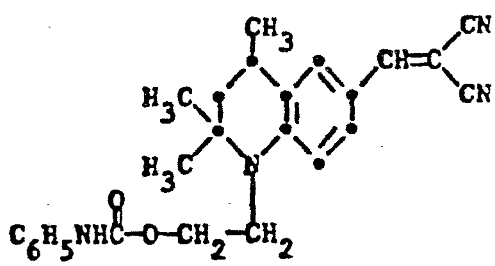

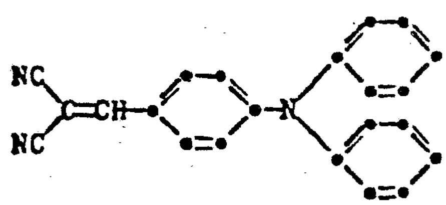

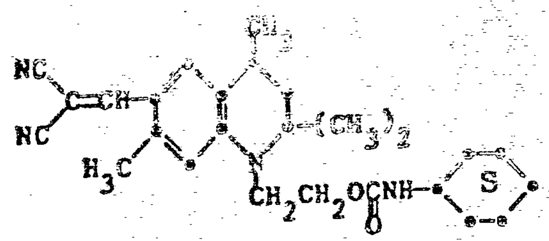

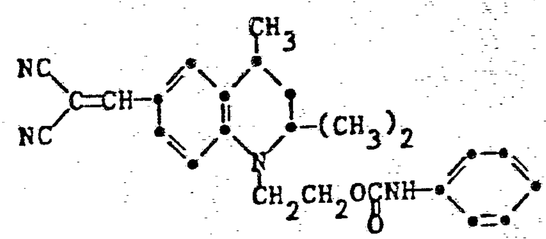

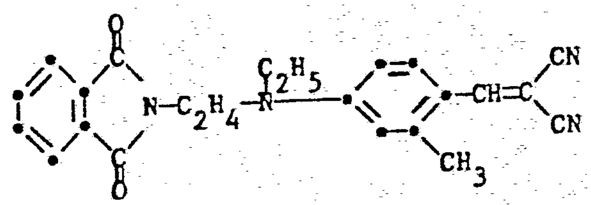

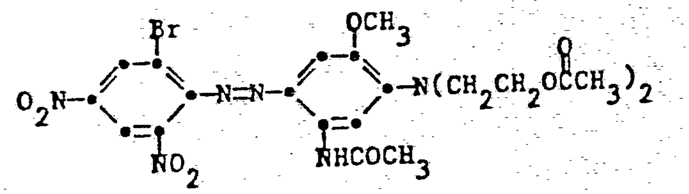

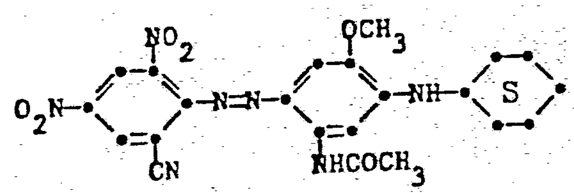

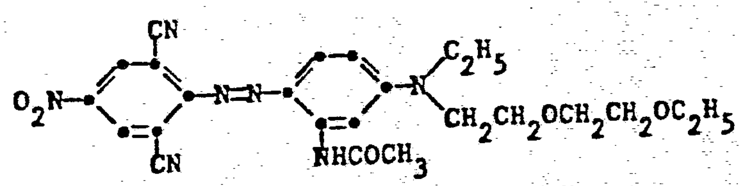

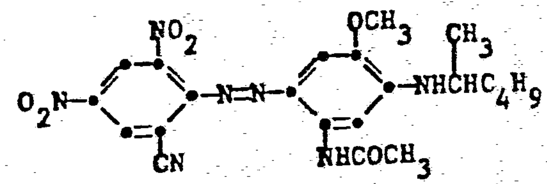

and

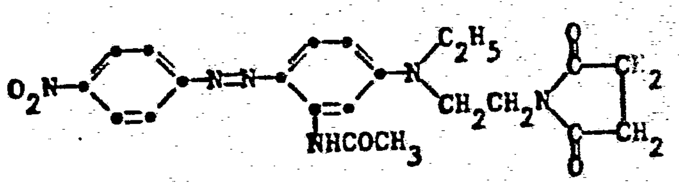

5. The composition of any of Claims 1-4 wherein the sodium lignin sulphonate comprises in percents by weight, sodium from 8 to 16, calcium below 1.0, $-OCH_3$ from 1 to 10, and sulphur from 1 to 10.

6. The composition of Claim 5 wherein the sodium lignin sulphonate comprises in percents by weight, sodium from 10 to 14, calcium below 0.7, $-OCH_3$ from 3 to 7 and sulphur from 3 to 7.

7. A dyebath for the dyeing of synthetic fibre material and such material blended with natural fibre material comprising an aqueous bath containing the dye composition of any of Claims 1-6 in an amount such that the dye is present in a concentration of from 0.01 to 10.0% on the weight of fibre to be dyed.

8. A process for exhaust dyeing synthetic fibre material and such material blended with natural fibre material which comprises entering the fibre material into a dyebath at a dyebath ratio of from 5:1 to 100:1 on the weight of fibre, the dyebath containing a dye composition of any of Claims 1-6 at a concentration of from 0.01 to 10.0% on the weight of fibre to be dyed.

0016642

European Patent Office

# EUROPEAN SEARCH REPORT

Application number

EP 80300856.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | DE - A - 2 207 753 (CIBA)<br>+ Page 1, lines 18,20; page 5, line 4; claim 4 +<br>-- | 1 | C 09 B 67/38<br>C 09 B 67/36<br>C 09 B 67/42<br>C 09 B 67/46<br>C 09 B 23/00<br>C 09 B 29/00<br>D 06 P 1/46<br>D 06 P 1/16<br>D P6 P 1/18 |
| | DE - A - 2 317 175 (CIBA)<br>+ Claims 3,5 +<br>-- | 1 | |
| | DE - A - 2 321 220 (CIBA)<br>+ Claims 2,4 +<br>-- | 1 | TECHNICAL FIELDS SEARCHED (Int.Cl. 3) |
| | DE - A1 - 2 443 063 (CIBA)<br>+ Page 10, lines 7, 10; claim 5 +<br>-- | 1 | C 09 B<br>D 06 P |
| | DE - A1 - 2 520 527 (CIBA)<br>+ Page 8, line 30; page 9, line 6; claim 8 +<br>-- | 1 | |
| A | A. CHWALA, V. ANGER, CH. CHWALA "Handbuch der Textilhilfsmittel"<br>Verlag Chemie, Weinheim, New York, 1977<br>pages 495, 496, 509, 510, 513, 514, 546, 554<br>---- | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 20-06-1980 | SCHÄFER |

EPO Form 1503.1 06.78